# EUROPÄISCHE PATENTSCHRIFT

(11) **EP 2 788 212 B1**
(45) Veröffentlichungstag und Bekanntmachung des Hinweises auf die Patenterteilung: **21.03.2018**
(21) Anmeldenummer: 12797900.3
(22) Anmeldetag: 05.12.2012
(51) Int. Cl.: B60K 6/24, B60K 6/40, B60L 11/18, F01M 11/00

(54) **KRAFTWAGEN**
MOTOR VEHICLE
VÉHICULE AUTOMOBILE

(30) Priorität: 09.12.2011 DE 102011088112
(43) Veröffentlichungstag der Anmeldung: 15.10.2014
(73) Patentinhaber: Bayerische Motoren Werke Aktiengesellschaft, 80809 München (DE)
(72) Erfinder: DOEPKE HUBERTUS, 83022 Rosenheim (DE)
(86) Internationale Anmeldenummer: PCT/EP2012/074494
(87) Internationale Veröffentlichungsnummer: WO 2013/083625

(56) Entgegenhaltungen:
- EP-A1- 0 814 557
- EP-A1- 2 345 552
- ES-A1- 2 181 557

## Beschreibung

Die Erfindung betrifft einen Kraftwagen, insbesondere ein Hybrid-Fahrzeug, gemäß dem Oberbegriff von Patentanspruch 1.

Aus dem allgemeinen Stand der Technik sind Hybrid-Fahrzeuge bekannt. Ein solches Hybrid-Fahrzeug weist eine Verbrennungskraftmaschine sowie wenigstens einen Elektromotor auf. Sowohl die Verbrennungskraftmaschine als auch der Elektromotor dienen zum Antreiben des Hybrid-Fahrzeugs. Mit anderen Worten können angetriebene Räder des Hybrid-Fahrzeugs mittels des Elektromotors und mittels der Verbrennungskraftmaschine angetrieben werden.

Das Hybrid-Fahrzeug umfasst dabei ferner wenigstens eine elektrische Speichereinrichtung, insbesondere eine Batterie, über welche der Elektromotor mit elektrischem Strom zu versorgen ist.

Es ist bekannt, dass die Verbrennungskraftmaschine als sogenannter Reichweitenverlängerer (Range Extender) fungieren kann. Ist die elektrisch gespeicherte Energie der elektrischen Speichereinrichtung erschöpft, so kann die elektrische Speichereinrichtung mittels der Verbrennungskraftmaschine unter Verbrennung von Kraftstoff wieder geladen werden, ohne dass es vonnöten wäre, die elektrische Speichereinrichtung über ein externes Stromnetz zu laden.

Ferner sind sogenannte Plug-In-Hybrid-Fahrzeuge bekannt. Bei einem solchen Plug-In-Hybrid-Fahrzeug wird die elektrische Speichereinrichtung derart aufgeladen, dass die elektrische Speichereinrichtung mit einem externen Stromnetz verbunden wird. Die Verbindung zwischen der elektrischen Speichereinrichtung und dem externen Stromnetz erfolgt beispielsweise mittels eines Stromkabels.

Zur Realisierung eines komfortablen Ladens der elektrischen Speichereinrichtung ist jedoch auch das sogenannte induktive Laden bekannt. Die US 5,703,461 offenbart ein Elektrofahrzeug, dessen Batterie über eine Sekundärspule des Elektrofahrzeugs geladen werden kann.

Neben dem Komfortaspekt, dass das Elektrofahrzeug nach dem Abstellen, z.B. zu Hause immer automatisch nachgeladen werden und der Fahrer fast ausschließlich einen vollen Speicher bei Fahrtbeginn vorfindet, ist systembedingt die höhere Verfügbarkeit des Elektrofahrzeugs am Stromnetz beim induktiven Laden vorteilhaft. Dies ist bezüglich der Belastung/Auslastung des Stromnetzes vorteilhaft, trägt aber auch zur Entlastung der elektrischen Speichereinrichtung bei, da diese häufiger mit kleinen Ladehüben geladen wird.

Die Sekundärspule kann mit einer Primärspule zusammenwirken. Dabei ist die Primärspule an einer Energiequelle angeschlossen. Über die Primärspule und die Sekundärspule kann elektrische Energie induktiv übertragen und so die Batterie geladen werden.

Aus der EP 2 345 552 A1 ist ein Hybrid-Fahrzeug bekannt, mit einer Verbrennungskraftmaschine und einem Elektromotor sowie mit einer Ladeeinrichtung für eine elektrische Speichereinrichtung zur Versorgung des Elektromotors mit elektrischem Strom. Die Ladeeinrichtung ist im Motorraum des Hybrid-Fahrzeugs angeordnet und weist eine Spule auf, über die zum Laden der elektrischen Speichereinrichtung elektrische Energie induktiv übertragbar ist.

Die fahrzeugseitige Spule (Sekundärspule) weist jedoch einen nicht unerheblichen Bauraumbedarf auf. In Zusammenspiel mit Anforderungen, die zu erfüllen sind, um ein sicheres Laden der elektrischen Speichereinrichtung zu gewährleisten, kann die Anordnung der Spule im Fahrzeug problematisch sein und insbesondere hinsichtlich einer Bodenfreiheit des Fahrzeugs zu Package-Problemen führen.

Es ist daher Aufgabe der vorliegenden Erfindung, einen Kraftwagen mit wenigstens einem Elektromotor zum Antreiben des Kraftwagens bereitzustellen, welcher eine bauraumgünstige Anordnung der Spule aufweist.

Diese Aufgabe wird durch einen Kraftwagen mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Ein solcher Kraftwagen umfasst wenigstens einen Elektromotor zum Antreiben des Kraftwagens. Über den Elektromotor ist wenigstens ein Rad des Kraftwagens antreibbar. Der Kraftwagen umfasst auch wenigstens eine elektrische Speichereinrichtung, über welche der Elektromotor mit elektrischem Strom versorgbar ist.

Des Weiteren ist eine Ladeeinrichtung mit wenigstens einer fahrzeugseitigen Spule vorgesehen. Über die Spule ist zum Laden der elektrischen Speichereinrichtung elektrische Energie induktiv übertragbar.

Bei der Spule handelt es sich beispielsweise um eine Sekundärspule, welche mit einer Primärspule induktiv und somit berührungslos zusammenwirken kann. Die Primärspule ist beispielsweise mit einer Energiequelle, insbesondere einem Stromnetz, verbunden, so dass über ein zwischen der Primärspule und der Sekundärspule begrenztes Magnetfeld elektrische Energie auf die fahrzeugseitige Spule übertragen werden kann. Dadurch kann die elektrische Speichereinrichtung mit elektrischer Energie geladen werden.

Erfindungsgemäß ist zumindest eine Verbrennungskraftmaschine vorgesehen, welche ein Behältnis aufweist, in welchem Schmiermittel zum Schmieren der Verbrennungskraftmaschine aufnehmbar ist. Dabei ist die fahrzeugseitige Spule (Sekundärspule) an dem Behältnis angeordnet.

Durch die Anordnung bzw. Halterung der Spule an dem Behältnis werden Synergien zwischen den Anforderungen insbesondere an die Anordnung des Behältnisses und den Anforderungen insbesondere an die Anordnung der fahrzeugseitigen Spule genutzt. Die Spule ist dadurch an einer vorteilhaften Stelle im Kraftwagen angeordnet, so dass sie sehr gut mit der Primärspule zusammenwirken kann. Darüber hinaus ist die Spule besonders bauraumgünstig angeordnet, so dass Package-Probleme gelöst und/oder vermieden werden können. Die Spule kann dabei außerhalb des Behältnisses angeordnet oder in das Behältnis integriert sein.

Bei dem Behältnis handelt es sich vorzugsweise um eine sogenannte Ölwanne der Verbrennungskraftmaschine, in welcher das Schmiermittel, insbesondere Öl, aufnehmbar und sammelbar ist. Nach erfolgter Schmierung der Verbrennungskraftmaschine sammelt sich das Schmiermittel in dem Behältnis (Ölwanne), von welchem es zum erneuten Schmieren der Verbrennungskraftmaschine abgeführt werden kann. Dabei ist das Behältnis in Fahrzeughochrichtung an einem tiefen, insbesondere tiefsten, Punkt der Verbrennungskraftmaschine angeordnet, so dass sich das Schmiermittel auf einfache Weise unter Einwirkung der Schwerkraft in dem Behältnis sammeln kann. Infolge der Integration der Spule in das Behältnis ist somit auch die Spule an einem in Fahrzeughochrichtung sehr tiefen Punkt des Kraftwagens angeordnet, so dass die Spule vorteilhaft und effizient mit der Primärspule zusammenwirken kann.

Ein weiterer Vorteil ist, dass zwischen der Verbrennungskraftmaschine und der fahrzeugseitigen Spule kein unerwünschter Abstand vorgesehen sein muss, um Relativbewegungen der Verbrennungskraftmaschine zur Spule zu ermöglichen, ohne, dass es zu einem Kontakt der Verbrennungskraftmaschine mit der Spule infolge der Relativbewegungen kommt. Bei dem erfindungsgemäßen Kraftwagen kann sich die Spule mit der Verbrennungskraftmaschine während ihres Betriebs mitbewegen. Infolge der Vermeidung des Abstands zwischen der Spule und dem Behältnis bzw. der Verbrennungskraftmaschine eine ausreichende Bodenfreiheit des Kraftwagens gewährleistet werden.

In vorteilhafter Ausgestaltung der Erfindung weist das Behältnis wenigstens einen Aufnahmeraum zum Aufnehmen des Schmiermittels auf, wobei die Spule in dem Aufnahmeraum aufgenommen ist. So kann ohnehin zur Verfügung stehender Bauraum genutzt werden, um die Spule bauraumgünstig und für das Zusammenwirken mit der Primärspule vorteilhaft anzuordnen.

Vorteilhafterweise ist auch wenigstens eine der Spule zugeordnete Elektronikkomponente an dem Behältnis angeordnet. Vorzugsweise ist die Elektronikkomponente in dem Aufnahmeraum angeordnet ist. Dadurch kann der zur Verfügung stehende Bauraum besonders effizient genutzt werden.

Die Anordnung der Spule sowie gegebenenfalls der wenigstens einen Elektronikkomponente in dem Aufnahmeraum stellt ein Baukastenkonzept dar, durch welches fahrzeugseitige Auswirkungen und Anpassungen durch Aufnahme der Spule in dem Aufnahmeraum vermieden oder gering gehalten werden können. Mit anderen Worten ist die Spule auf zeit- und kostengünstige Weise modular in dem Aufnahmeraum anzuordnen und vorzusehen, wenn die induktive Ladeeinrichtung bei dem Kraftwagen verbaut wird. Die Verbrennungskraftmaschine kann durch einfaches Austauschen des Behältnisses sowohl bei dem erfindungsgemäßen Kraftwagen mit der induktiven Ladeeinrichtung als auch bei Kraftwagen ohne die induktiven Ladeeinrichtungen verwendet werden. Dies hält die Kosten aufgrund von Skaleneffekten gering.

Der positive Baukasteneffekt besteht im Wesentlichen insbesondere darin, dass bei Plug-In-Hybrid-Fahrzeugen Adaptionskosten der Spule auf die Entwicklung des Behältnisses begrenzt sind. Da Plug-In-Hybrid-Fahrzeuge zumindest überwiegend aus konventionellen Fahrzeugkonzepten, bei welchen ausschließlich Verbrennungskraftmaschinen zum Einsatz kommen, abgeleitet werden, ist es vorteilhaft, Adaptionsvorhalte und/oder Maßnahmen für eine entsprechende Anbindung der Spule zu vermeiden oder sehr gering zu halten. Dies hält insbesondere die Kosten gering und führt zu einer bauraumgünstigen Anbindung der Spule und gegebenenfalls der ihr zugeordneten Elektronikkomponente.

Bei der wenigstens einen elektronischen Komponenten handelt es sich beispielweise um wenigstens einen Gleichrichter und/oder wenigstens einen Kondensator, insbesondere ein Kondensatorpaket. Die Elektronikkomponente bzw. Elektronikkomponenten und die Spule sind einem Resonanzschwingkreis zugeordnet zur Darstellung des induktiven Ladens.

Die Elektronikkomponente bzw. Elektronikkomponenten kann bzw. können gemeinsam mit der Spule in einem gemeinsamen Gehäuse in enger Nähe zu der Spule angeordnet sein. Alternativ kann vorgesehen sein, dass die Spule und die wenigstens eine Elektronikkomponente in jeweils eigenen, voneinander separaten und getrennten Gehäusen angeordnet und elektrisch miteinander verbunden sind. Vorteilhaft dabei ist eine flexible und bedarfsgerechte Anordnung an oder in dem Behältnis. Dabei kann vorgesehen sein, dass die Spule in ihrem Gehäuse in dem Aufnahmeraum angeordnet ist, während die wenigstens eine Elektronikkomponente an einer anderweitigen Stelle des Kraftwagens angeordnet ist.

Bei einer weiteren vorteilhaften Ausführungsform der Erfindung ist ein den Aufnahmeraum in Fahrzeughochrichtung nach unten begrenzender Boden des Behältnisses und/oder das gesamte Behältnis aus einem nicht-magnetischen Werkstoff, insbesondere aus einem Kunststoff, gebildet. Somit ist ein störungsfreies, sicheres und effizientes Laden der Speichereinrichtung infolge der vorteilhaften Energieübertragung zwischen der Primärspule und der fahrzeugseitigen Spule (Sekundärspule) ermöglicht, ohne dass metallische Komponenten des Behältnisses das Magnetfeld zwischen der Spule und der Primärspule beeinträchtigen können.

Der erfindungsgemäße Kraftwagen ist beispielsweise als Hybrid-Fahrzeug ausgebildet, bei welchem der Kraftwagen sowohl mittels des Elektromotors als auch zumindest unterstützend mittels der Verbrennungskraftmaschine antreibbar ist. Die Verbrennungskraftmaschine kann auch lediglich als Reichweitenverlängerer fungieren, so dass das Hybrid-Fahrzeug lediglich mittels des Elektromotors antreibbar ist. Der Reichweitenverlängerer (Range-Extender) dient dazu, bei erschöpftem Speicherinhalt der elektrischen Speichereinrichtung diese unter Verbrennung von Kraftstoff zu laden. Dabei kann die Verbrennungskraftmaschine zumindest im Wesentlichen stationär und in einem verbrauchsgünstigen Betriebspunkt betrieben werden. Der erfindungsgemäße Kraftwagen ist somit emissionsarm antreibbar und weist insbesondere einen nur geringen Kraftstoffverbrauch und somit geringe CO₂-Emissionen auf.

Bei dem Kraftwagen kann es sich insbesondere um ein Plug-In-Hybrid-Fahrzeug handeln, bei welchem die elektrische Speichereinrichtung auf einfache und für den Fahrer komfortable Weise über die Spule aufgeladen werden kann.

Weitere Synergieeffekte infolge der Anordnung der Spule und gegebenenfalls der wenigstens einen Elektronikkomponente an dem Behältnis und insbesondere infolge der Integration dieser in das Behältnis sind auch insofern erzielt, als das Behältnis und die Spule sowie gegebenenfalls die wenigstens eine Elektronikkomponente vorzugsweise in sogenannten kalten Bereichen des Kraftwagens anzuordnen bzw. angeordnet sind. Im Bereich des Behältnisses und damit der Spule sind interne und externe Kühlungsvoraussetzungen günstig sowie Temperaturbeaufschlagungen von Abgasstrangkomponenten der Verbrennungskraftmaschine vermieden oder zumindest sehr gering. So kann die Spule und gegebenenfalls die wenigstens eine Elektronikkomponente während des Aufladens der elektrischen Speichereinrichtung gekühlt bzw. relativ kühl gehalten werden, was einen effizienten Ladevorgangs ermöglicht.

Es ist möglich, die Spule und gegebenenfalls die wenigstens eine Elektronikkomponente, die sich während des Ladens der elektrischen Speichereinrichtung erwärmen kann bzw. können, mittels des Schmiermittels zu kühlen. Dabei kann sowohl die Kapazität des Schmiermittels als auch eine Oberfläche des Behältnisses zur Kühlung der Spule genutzt werden. Dadurch kann auf zusätzliche Kühlungseinrichtungen verzichtet werden.

Des Weiteren ist es möglich, die Erwärmung der Spule während des Ladens zu nutzen, um das Schmiermittel zu erwärmen. Dabei kann ein Wärmeübergang von der Spule zu dem Schmiermittel stattfinden. Dadurch ist es möglich, die Verbrennungskraftmaschine vor ihrem Start zu erwärmen, so dass sie bereits bei oder besonders frühzeitig nach ihrem Start reibungsarm und somit kraftstoffverbrauchsarm betrieben werden kann.

Mittels einer Pumpeinrichtung, insbesondere einer elektrischen Pumpe, kann das mittels der Spule erwärmte Schmiermittel gefördert werden und so in der Verbrennungskraftmaschine zirkulieren, um diese infolge weiterer Wärmeübergänge von dem Schmiermittel an die kältere Verbrennungskraftmaschine zu erwärmen.

Vorteilhafterweise wird der Ladezyklus zum Laden der elektrischen Speichereinrichtung unmittelbar vor Fahrtbeginn durchgeführt, so dass bereits bei Fahrtbeginn die Verbrennungskraftmaschine erwärmt ist. Dabei kann der Fahrer vorzugsweise seinen gewünschten Fahrtbeginn programmieren, um den Ladezyklus entsprechend vor Fahrtbeginn automatisch zu beginnen und unmittelbar vor Fahrtbeginn zu beenden. Auf diese Weise kann bereits zu Fahrtbeginn auch ein temperierter Fahrgastraum für den Fahrer bereitgestellt werden.

In weiterer vorteilhafter Ausgestaltung ist die Spule im Bereich einer Achse, insbesondere einer Vorderachse, mit lenkbaren Rädern des Kraftwagens angeordnet. Somit ist die fahrzeugseitige Spule auf besonders einfache und schnelle Weise relativ zur Primärspule und insbesondere in zumindest bereichsweiser Überdeckung mit dieser zu positionieren. Lenkbewegungen des Fahrers des Kraftwagens wirken sich somit zumindest im Wesentlichen unmittelbar auf die Position der fahrzeugseitigen Spule relativ zur Primärspule aus. Dies führt zu einem komfortablen Ladevorgang.

Bei einer weiteren Ausführungsform der Erfindung ist die Spule zumindest bereichsweise in einem Zwischenraum, zum Beispiel eines Vorderachsträgers des Kraftwagens, angeordnet, welcher durch wenigstens zwei Trägerelemente des Kraftwagens, insbesondere des Vorderachsträgers, mindestens bereichsweise begrenzt ist. Dadurch können die Trägerelemente die Spule bei einer unfallbedingten Kraftbeaufschlagung des Kraftwagens schützen und somit Beschädigungen gering halten. Ferner kann dadurch ohnehin zur Verfügung stehender Bauraum genutzt werden. Die Spule ist dadurch besonders bauraumgünstig angeordnet.

Vorzugsweise weist die Spule eine Außenkontur auf, welche zumindest im Wesentlichen mit einer durch die Trägerelemente gebildeten Innenkontur des Zwischenraums korrespondiert. Dadurch kann der Zwischenraum effizient zur Anordnung der Spule genutzt werden. Insbesondere kann dadurch eine große, beim Laden wirksame Oberfläche der Spule dargestellt werden, um so hohe Energiebeträge übertragen zu können. Dies führt zu einem schnellen Ladevorgang.

Um den Zwischenraum effizient zu nutzen, kann die Außenkontur der Spule von einem zumindest im Wesentlichen kreisrunden Querschnitt unterschiedlich ausgebildet sein. Die Spule kann beispielsweise eckig, trapezförmig oder dergleichen ausgebildet sein. Durch diese Ausgestaltung der Spule insbesondere hinsichtlich ihrer aktiv wirksamen Oberfläche bzw. Übertragungsfläche beim Ladevorgang ist die Spule an Bauraumgegebenheiten und Einbaubedingungen angepasst, so dass Package-Probleme vermieden und/oder gelöst werden können.

Vorteilhafterweise ist die Spule in Fahrzeughochrichtung nach unten hin überdeckungsfrei zu magnetischen Bauteilen angeordnet. Mit anderen Worten ist die Spule in Fahrzeughochrichtung nach unten hin nicht durch magnetische Bauteile überdeckt. Dadurch sind ein effizienter Ladevorgang und eine effiziente Energieübertragung zwischen der Spule und der Primärspule ermöglicht. Abgasrohre, Leitungen und/oder anderweitige Komponenten des Kraftwagens, die das Magnetfeld zwischen der Spule und der Primärspule negativ beeinträchtigen könnten, sind vorzugsweise in Fahrzeugquerrichtung seitlich und/oder in Fahrzeughochrichtung oberhalb der Spule angeordnet.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Längsschnittansicht einer Ölwanne einer Verbrennungskraftmaschine eines Kraftwagens, welcher auch wenigstens einen Elektromotor umfasst, wobei in die Ölwanne eine Sekundärspule integriert ist, über welche eine elektrische Speichereinrichtung zum Versorgen des Elektromotors mit elektrischem Strom ladbar ist;
- Fig. 2: eine schematische Vorderansicht der Ölwanne mit der Sekundärspule gemäß Fig. 1;
- Fig. 3: eine schematische Unteransicht der Ölwanne mit der Sekundärspule gemäß den Fig. 1 und 2;
- Fig. 4: eine weitere schematische Seitenansicht der Ölwanne gemäß Fig. 2, welche über einer Primärspule angeordnet ist, mit welcher die Sekundärspule zusammenwirkt, um die elektrische Speichereinrichtung zu laden;
- Fig. 5: eine weitere schematische Unteransicht der Ölwanne gemäß Fig. 3, welche in einem von einem Vorderachsträger des Kraftwagens begrenzten Zwischenraum angeordnet ist; und
- Fig. 6: eine schematische Unteransicht einer weiteren Ausführungsform der Ölwanne mit der Spule gemäß Fig. 5.

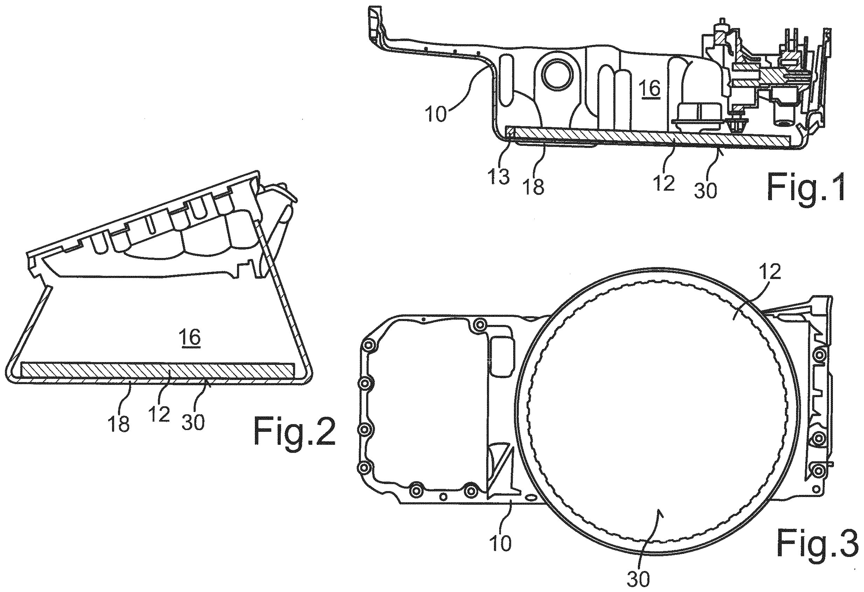

Die Fig. 1 bis 3 zeigen eine Ölwanne 10 für eine beispielsweise als Hubkolben-Verbrennungskraftmaschine ausgebildete Verbrennungskraftmaschine eines Hybrid-Fahrzeugs. Das Hybrid-Fahrzeug umfasst ferner wenigstens einen Elektromotor, mittels welchem das Hybrid-Fahrzeug antreibbar ist.

Dem Elektromotor ist zumindest eine elektrische Speichereinrichtung, insbesondere eine Batterie, zugeordnet. Über die Batterie ist der Elektromotor mit elektrischem Strom versorgbar, so dass der elektrische Motor wenigstens ein Rad des Hybrid-Fahrzeugs antreiben kann.

Die Verbrennungskraftmaschine dient dazu, den Kraftwagen anzutreiben und/oder die elektrische Speichereinrichtung zu laden, wenn die Batterie hinsichtlich des durch sie gespeicherten elektrischen Stroms erschöpft ist. Beim Laden der Batterie kann die Verbrennungskraftmaschine zumindest im Wesentlichen stationär und in einem verbrauchsarmen Betriebspunkt betrieben werden, so dass dadurch die Batterie mit einem nur sehr geringen Kraftstoffverbrauch aufgeladen werden kann.

Das Hybrid-Fahrzeug umfasst darüber hinaus eine Ladeeinrichtung, mittels welcher die Batterie induktiv ladbar ist. Dazu umfasst die Ladeeinrichtung eine fahrzeugseitige Sekundärspule 12, über welche zum Laden der Batterie elektrische Energie induktiv übertragbar ist. Die Ladeeinrichtung umfasst ferner der Sekundärspule 12 zugeordnete Elektronikkomponenten 13. Bei den Elektronikkomponenten 13 handelt es sich beispielsweise um einen Kondensator bzw. ein Kondensatorpaket und einen Gleichrichter. Der Kondensator bzw. Kondensatorpaket und die Sekundärspule 12 sind einem Resonanzschwingkreis zugeordnet, welchem der Gleichrichter nachgeschaltet ist.

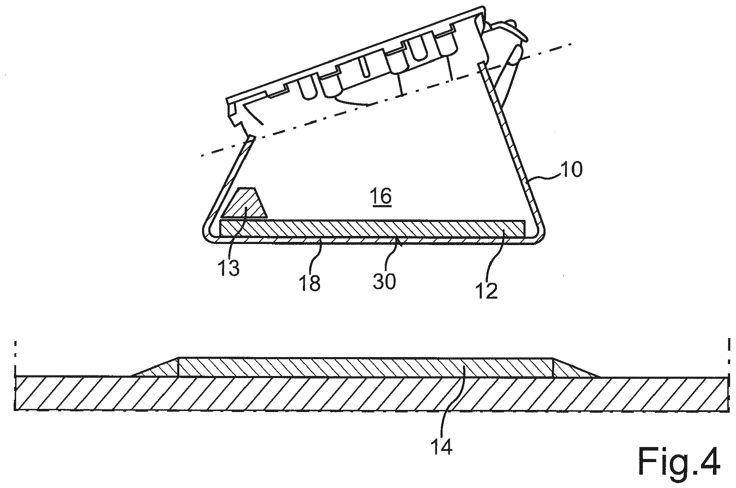

Zum Laden der Batterie wird die Sekundärspule 12 in Fahrzeughochrichtung in zumindest bereichsweiser Überdeckung mit einer Primärspule 14 (Fig. 4) gebracht, so dass die fahrzeugseitige Sekundärspule 12 mit der bodenseitigen Primärspule 14 zusammenwirken kann. Die Primärspule 14 ist mit einer Energiequelle, beispielsweise einem Stromnetz, verbunden, so dass elektrische Energie von der Primärspule 14 über ein eng begrenztes Magnetfeld auf die Sekundärspule 12 übertragen und so die Batterie geladen werden kann.

Wie insbesondere den Fig. 1 und 2 zu entnehmen ist, sind die Sekundärspule 12 und die Elektronikkomponenten 13 in die Ölwanne 10 integriert. Die Ölwanne 10 weist einen Aufnahmeraum 16 auf, in welchem Schmieröl der Verbrennungskraftmaschine zu sammeln und aufzunehmen ist. Das Schmieröl dient zum Schmieren relativ zueinander bewegbarer Komponenten der Verbrennungskraftmaschine. Nach erfolgter Schmierung der Komponenten der Verbrennungskraftmaschine sammelt sich das Schmieröl insbesondere unter Schwerkrafteinwirkung in der Ölwanne 10. Dazu ist die Ölwanne 10 in Fahrzeughochrichtung an einem besonders tiefen Punkt der Verbrennungskraftmaschine angeordnet. Diese Anordnung der Ölwanne 10 ist auch besonders günstig für die Sekundärspule 12, da diese infolge ihrer Integration in die Ölwanne 10 auch an dem besonders tiefen Punkt und somit in Bodennähe angeordnet ist. So kann die Sekundärspule 12 effizient mit der Primärspule 14 zusammenwirken.

Ein weiterer Vorteil ist, dass auch vorteilhafte Umgebungsbedingungen insbesondere hinsichtlich der Temperaturbeaufschlagung der Ölwanne 10 für die Sekundärspule 12 und die Elektronikkomponenten 13 genutzt werden können. Die Ölwanne 10 wird nicht oder nur sehr gering von Komponenten des Hybrid-Fahrzeugs und insbesondere des Abgasstrangs der Verbrennungskraftmaschine mit Wärme beaufschlagt und kann zumindest teilweise bei einer Fahrt des Hybrid-Fahrzeugs von Fahrtwind gekühlt werden, um für die Verbrennungskraftmaschine eine zumindest im Wesentlichen konstante Betriebstemperatur zu gewährleisten. Diese vorteilhaften Temperaturbedingungen kommen auch der Sekundärspule 12 und den Elektronikkomponenten 13 zugute. Gleichzeitig kann infolge der Integration der Sekundärspule 12 und der Elektronikkomponenten 13 in die Ölwanne 10 eine vorteilhafte Bodenfreiheit des Hybrid-Fahrzeugs dargestellt werden. Darüber hinaus können die Sekundärspule 12 und die Elektronikkomponenten 13 beim Laden mittels des Öls in der Ölwanne 10 gekühlt werden. Die vom Öl aufgenommene Abwärme kann durch gezielt gesteuertes Laden vor Fahrtbeginn genutzt werden, um die ausgekühlte Verbrennungskraftmaschine vorzuwärmen. So ist es möglich, Aufwärmphasen der Verbrennungskraftmaschine sehr kurz zu halten oder zu vermeiden.
Vorliegend sind die Sekundärspule 12 und die Elektronikkomponenten 13 im Aufnahmeraum 16 aufgenommen. So kann ohnehin zur Verfügung stehender Raum bzw. Bauraum genutzt werden, um die Sekundärspule 12 und die Elektronikkomponenten 13 bauraumgünstig anzuordnen und fahrzeugseitige Änderungen sowie Package-Probleme zu vermeiden.

Darüber hinaus sind in Fahrzeughochrichtung unterhalb der Ölwanne 10 und somit auch unterhalb der Sekundärspule 12 keine magnetischen bzw. metallischen Bauteile angeordnet, so dass die Energieübertragung zwischen der Sekundärspule 12 und der Primärspule 14 nicht negativ beeinflusst wird.

Vorzugsweise ist ein den Aufnahmeraum 16 in Fahrzeughochrichtung nach unten begrenzender Boden 18 der Ölwanne 10 aus einem nicht-magnetischen Werkstoff, insbesondere aus einem Kunststoff, gebildet. Dadurch kann eine effiziente und sichere Energieübertragung zwischen der Sekundärspule 12 und der Primärspule 14 sichergestellt werden.

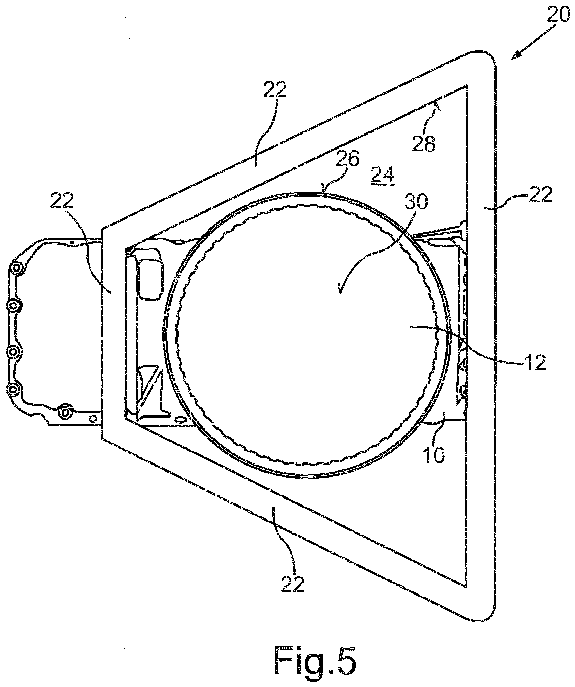

In der Fig. 5 ist ein Vorderachsträger 20 des Hybrid-Fahrzeugs dargestellt. An dem Vorderachsträger 20 sind beispielsweise lenkbare Vorderräder des Hybrid-Fahrzeugs angelenkt. Alternativ oder zusätzlich kann der Vorderachsträger 20 zur Lagerung der Verbrennungskraftmaschine und/oder des Elektromotors dienen. Der Vorderachsträger 20 weist Streben 22 auf, welche miteinander verbunden sind und durch welche ein Zwischenraum 24 zwischen den Streben 22 begrenzt ist.

Wie der Fig. 5 zu entnehmen ist, ist die Sekundärspule 12 mit der Ölwanne 10 nun zumindest teilweise in dem Zwischenraum 24 aufgenommen. Dadurch können die Streben 22 des Vorderachsträgers 20 die Sekundärspule 12 sowie die Ölwanne 10 bei einer unfallbedingten Kraftbeaufschlagung vor unerwünschten Beschädigungen schützen. Darüber hinaus wird durch die Anordnung der Sekundärspule 12 in dem Zwischenraum 24 ohnehin zur Verfügung stehender Bauraum genutzt, so dass dadurch eine bauraumgünstige Anordnung der Sekundärspule 12 realisiert ist.

Ein weiterer Vorteil der Anordnung der Sekundärspule 12 und der Elektronikkomponenten 13 im Bereich der Vorderachse ist, dass die Sekundärspule 12 einfach und schnell relativ zur Primärspule 14 positioniert werden kann. Lenkbewegungen des Fahrers des Hybrid-Fahrzeugs wirken sich zumindest im Wesentlichen unmittelbar auf die Positionierung der Sekundärspule 12 relativ zur Primärspule 14 aus. So können zeitaufwändige Lenkmanöver zur vorteilhaften Positionierung der Sekundärspule 12 relativ zur Primärspule 14 vermieden werden. Dies kommt einer komfortablen und effizienten Vorbereitung des Ladevorgangs zugute.

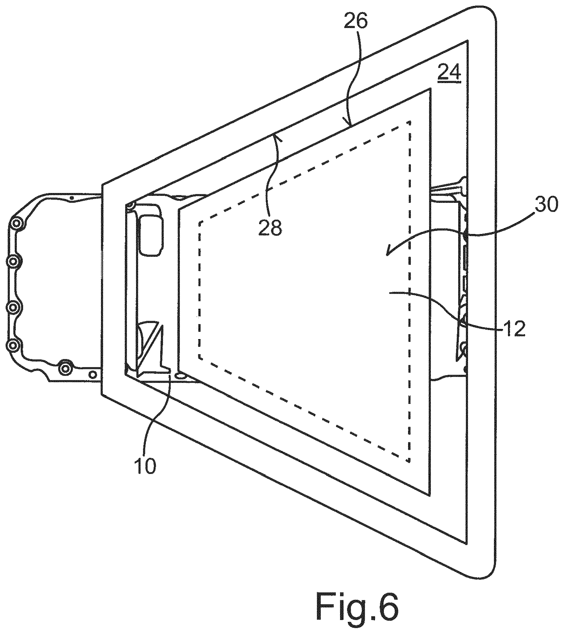

Wie anhand der Fig. 6 zu erkennen ist, kann die Sekundärspule 12 hinsichtlich ihrer Außenkontur 26 von einer im Querschnitt runden Form unterschiedlich ausgestaltet sein. Gemäß Fig. 6 ist die Außenkontur 26 der Sekundärspule 12 an eine Innenkontur 28 des Zwischenraums 24 zumindest im Wesentlichen angepasst. Dadurch kann der Zwischenraum 24 effizient ausgenutzt werden. Insbesondere ist dadurch eine besonders große, beim Ladevorgang aktiv wirksame Übertragungsfläche 30 für das Magnetfeld zwischen der Sekundärspule 12 und der Primärspule 14 dargestellt, so dass ein besonders schneller Ladevorgang der Batterie möglich ist. Die Außenkontur 26 der Sekundärspule 12 kann dabei zumindest im Wesentlichen trapezförmig, rechteckig oder anderweitig ausgebildet sein.

## Patentansprüche

1. Kraftwagen, mit wenigstens einem Elektromotor zum Antreiben des Kraftwagens, mit zumindest einer elektrischen Speichereinrichtung, über welche der Elektromotor mit elektrischem Strom versorgbar ist und mit einer Ladeeinrichtung mit wenigstens einer Spule (12), über welche zum Laden der elektrischen Speichereinrichtung elektrische Energie induktiv übertragbar ist, wobei eine Verbrennungskraftmaschine vorgesehen ist, welche ein Behältnis (10) aufweist, in welchem Schmiermittel zum Schmieren der Verbrennungskraftmaschine aufnehmbar ist, **dadurch gekennzeichnet, dass** die Spule (12) am Behältnis (10) angeordnet ist.

2. Kraftwagen nach Anspruch 1,
**dadurch gekennzeichnet, dass**
das Behältnis (10) wenigstens einen Aufnahmeraum (16) zum Aufnehmen des Schmiermittels aufweist, wobei die Spule (12) in dem Aufnahmeraum (16) aufgenommen ist.

3. Kraftwagen nach einem der Ansprüche 1 oder 2,
**dadurch gekennzeichnet, dass**
wenigstens eine der Spule (12) zugeordnete Elektronikkomponente (13) an dem Behältnis (16), insbesondere in dem Aufnahmeraum (16), angeordnet ist.

4. Kraftwagen nach Anspruch 2 oder nach Anspruch 3 in dessen Rückbezug auf Anspruch 2,
**dadurch gekennzeichnet, dass**
ein den Aufnahmeraum (16) in Fahrzeughochrichtung nach unten begrenzender Boden (18) des Behältnisses (10) oder das gesamte Behältnis (10) aus einem nicht-magnetischen Werkstoff, insbesondere aus einem Kunststoff, gebildet ist.

5. Kraftwagen nach einem der vorhergehenden Ansprüche,
**dadurch gekennzeichnet, dass**
die Spule (12) im Bereich einer Achse, insbesondere einer Vorderachse, mit lenkbaren Rädern des Kraftwagens angeordnet ist.

6. Kraftwagen nach einem der vorhergehenden Ansprüche,
**dadurch gekennzeichnet, dass**
die Spule (12) zumindest bereichsweise in einem durch wenigstens zwei Trägerelemente (22) des Kraftwagens mindestens bereichsweise begrenzten Zwischenraum (24) angeordnet ist.

7. Kraftwagen nach Anspruch 6,
**dadurch gekennzeichnet, dass**
die Spule (12) eine Außenkontur (26) aufweist, welche zumindest im Wesentlichen mit einer durch die Trägerelemente (22) gebildeten Innenkontur (28) des Zwischenraums (24) korrespondiert.

## Claims

1. A motor vehicle, with at least one electric motor for driving the motor vehicle, with at least one electrical storage device by means of which the electric motor can be supplied with electric current, and with a charging means with at least one coil (12), by means of which electric power can be transmitted inductively for charging the electrical storage device, wherein an internal combustion engine is provided which has a receptacle (10) in which lubricant for lubricating the internal combustion engine can be received, **characterised in that** the coil (12) is arranged on the receptacle (10).

2. A motor vehicle according to Claim 1,
**characterised in that**
the receptacle (10) has at least one receiving space (16) for receiving the lubricant, the coil (12) being accommodated in the receiving space (16).

3. A motor vehicle according to one of Claims 1 or 2,
**characterised in that**
at least one electronic component (13) associated with the coil (12) is arranged on the receptacle (16), especially in the receiving space (16).

4. A motor vehicle according to Claim 2 or according to Claim 3 in its dependency from Claim 2,
**characterised in that**
a base (18) of the receptacle (10) which limits the receiving space (16) downwards in the vertical direction of the vehicle, or the entire receptacle (10), is formed from a non-magnetic material, especially a plastics material.

5. A motor vehicle according to one of the preceding claims,
**characterised in that**
the coil (12) is arranged in the region of an axle, especially a front axle, with steerable wheels of the motor vehicle.

6. A motor vehicle according to one of the preceding claims,
**characterised in that**
the coil (12) is arranged at least in regions in a gap (24) which is limited at least in regions by at least two support elements (22) of the motor vehicle.

7. A motor vehicle according to Claim 6,
**characterised in that**
the coil (12) has an external contour (26) which corresponds at least substantially with an internal contour (28) of the gap (24) which is formed by the support elements (22).

## Revendications

1. Véhicule automobile comprenant au moins un moteur électrique permettant de l'entraîner, au moins un dispositif d'accumulation électrique permettant d'alimenter le moteur électrique en courant ainsi qu'un dispositif de charge comprenant au moins une bobine (12) permettant de transférer par induction, de l'énergie électrique pour charger le dispositif d'accumulation électrique,
véhicule automobile dans lequel il est prévu un moteur à combustion interne qui comporte un réservoir (10) dans lequel un agent de lubrification peut être prélevé pour lubrifier ce moteur à combustion interne,
**caractérisé en ce que**
la bobine (12) est montée sur le réservoir (10).

2. Véhicule automobile conforme à la revendication 1,
**caractérisé en ce que**
le réservoir (10) comporte au moins une chambre de prélèvement (16) de l'agent de lubrification, la bobine (12) étant logée dans la chambre de prélèvement (16).

3. Véhicule automobile conforme à l'une des revendications 1 et 2,
**caractérisé en ce qu'**
au moins un composant électronique (13) associé à la bobine (12) est monté sur le réservoir (16), en particulier dans la chambre de prélèvement (16).

4. Véhicule automobile conforme à la revendication 2 ou à la revendication 3, lorsqu'elle est rattachée à la revendication 2,
**caractérisé en ce que**
le fond (18) du réservoir (16) limitant la chambre de prélèvement (16) vers le bas dans la direction de la hauteur du véhicule, ou la totalité du réservoir (10) est réalisé en un matériau non magnétique, en particulier en matériau synthétique.

5. Véhicule automobile conforme à l'une des revendications précédentes,
**caractérisé en ce que**
la bobine (12) est montée dans la zone d'un essieu, en particulier de l'essieu avant équipé des roues directrices du véhicule.

6. Véhicule automobile conforme à l'une des revendications précédentes,
**caractérisé en ce que**
la bobine (12) est montée, au moins par segments dans une chambre intermédiaire (24) limitée au moins par segments par au moins deux éléments porteurs (22) du véhicule.

7. Véhicule automobile conforme à la revendication 6,
**caractérisé en ce que**
la bobine (12) a un contour externe (26) qui correspond au moins essentiellement à un contour interne (28) de la chambre intermédiaire (24) formé par les éléments porteurs (22).
